# EUROPEAN PATENT SPECIFICATION

(11) **EP 3 597 050 B1**
(45) Date of publication and mention of the grant of the patent: **11.05.2022**
(21) Application number: 18184419.2
(22) Date of filing: 19.07.2018
(51) Int. Cl.: A23L 7/191, A23L 19/00, A23L 25/00, A23L 7/126

(54) **METHOD FOR MANUFACTURING A LOW SUGAR SHAPED SNACK**
VERFAHREN ZUR HERSTELLUNG EINES ZUCKERREDUZIERTES SNACKPRODUKTES
PROCÉDÉ DE FABRICATION D'UN SNACK À FAIBLE TENEUR EN SUCRE

(43) Date of publication of application: 22.01.2020
(73) Proprietor: Intersnack Group GmbH & Co. KG, 40468 Düsseldorf (DE)
(72) Inventor: van Haren, Catharina Gertruda Anna Gerarda, 7006 DC Doetinchem (NL); Nauta, Jan, 7451 EB Holten (NL)
(74) Representative: Becker Kurig & Partner Patentanwälte mbB

(56) References cited:
- EP-A2- 0 306 773
- WO-A2-2008/085529
- DE-A1- 3 538 805
- US-A1- 2011 020 503
- DATABASE GNPD [Online] MINTEL; 2 March 2012 (2012-03-02), anonymous: "Strawberry & Chocolate Sugar-Free Cereal Bars", XP055504765, retrieved from www.gnpd.com Database accession no. 1730143
- SAJILATA M G ET AL: "Specialty starches for snack foods", CARBOHYDRATE POLYMERS, APPLIED SCIENCE PUBLISHERS, LTD. BARKING, GB, vol. 59, no. 2, 10 January 2005 (2005-01-10), pages 131-151, XP027721586, ISSN: 0144-8617 [retrieved on 2005-01-10]
- DATABASE GNPD [Online] MINTEL; 21 September 2018 (2018-09-21), anonymous: "White Chocolate Coconut Flavour Protein Bar", XP055688192, retrieved from www.gnpd.com Database accession no. 5997045

## Description

### TECHNICAL FIELD

The present invention relates to a method for the manufacturing of a low sugar shaped snack product, typically in the form of a round ball (cluster), bite (round shaped) or bar shaped. In this connection the invention further relates to the use of a binder composition for the preparation of the bar shaped low sugar snack product.

### PRIOR ART

In current health-food dominated markets there is a need for snacks, typically in the form of bars, that can provide an energy source that is low in sugar. Snacks are capable of providing a between-meals snack that provides a temporary source of energy in a convenient way and allows for easy portion control.

Snack bars based on nuts are common in the market, often in combination with high amounts of chocolate and sugars. Commercially well known examples are Mars and Snicker bars, but also in more recent times, the market is provided with bars that are labelled as healthy, fiber-containing and contain nuts, cereals and dried fruits. These are presented to customers as the more healthy and responsible snack compared to chocolate and sugar-loaded candy bars.

Typically, these bars are formed using sugar (glucose or sucrose)-syrup based adhesive to adhere the component to each other followed by forming the snack product. For instance, US 2005255218A (describes a process wherein foodpieces are coated with a first low- sugar adhesive coating followed by a second low-sugar topcoat (maltodextrin). US 2016128368 & WO 2015069814 describe psyllium-containing non-baked snack bars that may contain many other ingredients (nuts, fruits etc.) and may contain maltodextrin. The focus is on using psyllium (fibers) in food products. GB 2523449 describes a popcorn bar that may contain polyol-based binders complemented with glucose based syrups. CN 101564172 describes a low sugar food bar with cereals and fibers. Binding of the components of the food bar is with sugar alcohols. US 2007212453 describes a product in a fat phase wherein 'botanicals' (fruit) are dispersed and that may further contain a sweetener. WO 2008/085529 A2 describes a method for manufacturing a snack product comprising the steps of: providing a food component selected from the group consisting of nuts, dried or infused fruits, seeds, beans, puffed cereals and any mixture thereof, providing an aqueous binder composition, which mixture comprises a partially acid-hydrolyzed starch, mixing the food component and the aqueous binder composition, shaping the snack product from the this obtained mixture and drying the snack product. It has now been found that a shaped snack product comprising nuts, seeds, beans, dried fruits, puffed cereals and any mixtures thereof that is low in sugar can be provided by a manufacturing method that overcomes the issues associated with the known products and provides for a low sugar product that is suitable as a snack and can be formed and shaped as desired by using a binder composition that is low in calories, yet provides a non sweet taste.

### DESCRIPTION OF THE INVENTION

The invention thus relates to a method for the manufacturing a snack product comprising the steps as defined in claim 1.

According to the present invention the claimed method comprises a further step of mixing into the obtained mixture of food component or the food component mixture and the aqueous binder composition a partially enzymatic hydrolysed starch, as described herein, in dry form, and mixing the thus obtained mixture, before shaping the snack product from the thus obtained mixture, and drying the snack product at an elevated temperature.

In the first step of the claimed method, the food component or food component mixture is provided. The food component comprises of a plurality of parts, i.e. a plurality of nuts, a plurality of dried or infused fruits, a plurality of seeds, a plurality of beans, a plurality of puffed cereals, or any mixtures thereof. According to a preferred embodiment the food component is preferably provided at least in part in the form of a comminuted food component or a mixture of food components, more preferably with an average diameter of up to 2 mm. Preferably the amount of such a comminuted food component is from 10 wt.% up to 50 wt.%, and still more preferred in an amount of from 20 wt.% up to 40 wt.%. Still more preferred the amount of the comminuted food component is around 30 wt.% up to 50 % by weight. Each of these values are drawn on the total amount of food component comprised in the prepared snack product. It is also possible to provide food components consisting of halves, quarters and smaller parts having an average diameter of from 0.01 to 8 mm, and preferably from 0.02 to 6 mm and still more preferably of from 0.04 to 4 mm, or in any mixed version thereof. In a preferred embodiment the provided mix comprises 0-10 % halves, 30-60 % quarters and 30-60 % smaller parts, wherein the individual portions are such that in total a value of 100 % is achieved for the mix of food components. The provided comminuted nuts in the above embodiment may be replaced, whole or in part by comminuted fruits parts, seeds, beans, puffed cereals, or any mixture thereof. As it relates to the preferred average diameters of these comminuted compounds and there preferred portions in a mix, the same as for the nuts applies. Comminuting the food components is achieved by using conventional means for chopping the food components.

The aqueous binder composition is provided by mixing the partially acid-hydrolyzed starch, more preferably the partially acid-hydrolyzed corn or wheat starch with water. The ratio of binder substance(s) : water may vary, for instance depending on the composition of the food components from 1:10 to 10:1, with a preference for 1:5 to 5:1 and a higher preference of 1:2 to 2:1. Preferred embodiments of partially acid-hydrolyzed will be described below in line with the snack product which can be manufactured by the method according to the invention. For example, the aqueous binder composition may preferably contain 5-25 wt.% of a partially acid-hydrolyzed corn or wheat starch, drawn on the total amount of the food component. Other preferred ranges are specified below in line with the snack product which can be manufactured by the method according to the invention.

In order to dissolve the partially acid hydrolysed starch it is preferred to use water of a temperature between 20 °C to 60 °C, more preferably between 40 °C to 60 °C and still more preferably of 55 °C.

After formation of the aqueous binder composition, the aqueous binder composition is mixed with the food component and the snack product which can be manufactured by the method according to the invention is shaped using conventional means for shaping snack bar type products.

According to the invention a partially enzymatic hydrolyzed starch is added to the mixture obtained by mixing the food component or the food component mixture and the aqueous binder composition prior to the shaping step. In particular" the partially enzymatic hydrolyzed starch is added in a dry form. Particularly preferred embodiments of a partially hydrolyzed starch will be described below in line with the snack product which can be manufactured by the method according to the invention. For example, the partially enzymatic hydrolyzed starch is preferably 0.1-6 wt.% of a maltodextrin, drawn on the total amount of the food component. This mixing of the partially enzymatic hydrolyzed starch in dry form into the obtained mixture of the food component or the food component mixture and the aqueous binder composition improves the adhesion of the binder to the food components (nuts, fruits, seeds, beans) and improves the forming capabilities significantly.

As the partially enzymatic hydrolysed starch is used in dry form the shaping of the snack product after obtaining a mixture of the aqueous binder composition, the food component or food component mixture, and the partially enzymatic hydrolysed starch should take place as quickly as possible, preferably not longer than 30 minutes after adding the partially enzymatic hydrolysed starch, and still more preferably within 5 to 15 minutes after adding the partially enzymatic hydrolysed starch. The snack product is shaped using conventional means for shaping snack bar type products.

Any other optional ingredients, such as cocoa nibs, dried vegetables, puffed non-cereals, grains, sugars, syrups, flavoring compounds and the like, may in one embodiment of the present invention be added together with the food component or food component mixture. According to another embodiment any optional further ingredient may be added later in the process, but in any case so timely that a sufficient mixing can be achieved.

The drying step subsequently removes the water from the product to a desired level and allows the binding of the components together to yield the desired product. Preferably the product is dried until a water content in the range of from 0.5 wt.% to 3 wt.%, based on the total weight of the shaped snack product, is obtained.

The shaped product is dried to get the right moisture content needed for shelf life. The drying can be continued until the snack product is firm enough for further processing or until a desired water content is achieved. The drying can be performed at an elevated temperature to accelerate the drying step and the overall production process. In the drying step, the elevated temperature may vary from 80 degrees Celsius to 150 degrees Celsius, preferably from 100 to 150 degrees Celsius. The drying time may vary from 5 minutes to 1 hour, preferably from 15 minutes to 45 minutes, more preferably from 25 to 35 minutes.

The dried product can then suitable be packed, for instance by flow wrap, stored and transported.

The shaped snack product which can be manufactured by the method according to the invention comprises a food component selected from the group consisting of nuts, dried or infused fruits, seeds, beans, puffed cereals and any mixtures thereof, and a binder composition. The snack product which can be manufactured by the method according to the invention thus comprises nuts, dried or infused fruits, seeds or beans or any combination thereof, such as nuts and dried fruits, nuts and seeds, nuts and beans or dried fruits and seeds, dried fruits and beans or beans and seeds and or puffed cereals. Other combinations of nuts, dried fruits, seeds and/or beans and/or puffed cereals are also foreseen. The binder composition is capable of binding the ingredients or parts of the food component, such as the nuts and/or dried fruits, and any optionally comprised further ingredients, to each other, and allows that the shaped snack product of the invention has a desired shape, such as a bar, square or round, or another shape that may be regarded as attractive for the consumer, like clusters, bites etc.

The binder composition may be present in an amount of from 0.1 up to 50 wt.%, drawn on the total amount of food component. The amount of the binder composition may vary depending on the (relative) amount and size and type of food component. According to a preferred embodiment the lower limit is 0.2 wt.%, and still more preferred the lower limit is 1.0 wt.%, 2.0 wt.%, 2.2 wt.%, 4.0 wt.%, 4.4 wt.% or 6.0 wt.%, drawn on the total amount of food component. The upper limit is preferably 35 wt.%, and still more preferred 30 wt.%, 25 wt.%, 20 wt.%, 15 wt.% or 10 wt.%, drawn on the total amount of food component. Therefore, the binder composition can as an example be present in an amount of 1.0 up to 25 wt.% or in an amount of 2.5 up to 15 wt.%, drawn on the total amount of food component.

The binder composition comprises a partially acid-hydrolyzed starch that is preferably a partially acid-hydrolyzed wheat or a corn starch or any mixture thereof. The partially acid-hydrolyzed starch, and preferably the partially acid-hydrolyzed wheat or a corn starch or any mixture thereof, may be present in an amount of 0.1 -25 wt.% drawn on the total amount of food component. The partially acid-hydrolyzed starch may preferably be present in an amount of 1-20 wt.%, more preferably in an amount of 2-19 wt.%, still more preferably in an amount of 4-18 wt.% and still more preferred in an amount of 6-17 wt.%, drawn on the total amount of food component. For example the amount may be 2-15 wt.%, drawn on the total amount of food component.

Preferred partially acid-hydrolyzed starches are low in di- and monosaccharides and high in dietary fiber. That is these preferred acid-hydrolyzed starches comprise preferably more than 55 wt.% of dietary fibers, and still more preferably more than 65 wt.% or more than 75 wt.% or more than 80 wt.% of dietary fibers, drawn on the dry substance. According to a preferred embodiment the amount of di- and monosaccharides, excluding polyols, i.e. alcohols which contain more than two hydroxyl groups, in the preferred acid-hydrolyzed starches mentioned in this paragraph is less than 0.5 wt.% and still more preferably less than 0.45 wt.%, drawn on the dry substance. For example, a preferred partially acid-hydrolyzed starch is a partially acid-hydrolyzed maize or wheat starch with a dietary fiber content of more than 80 wt.% and a di- and monosaccharide content of less than 0.5 wt.%, drawn on the dry substance. In addition, the starch may comprise other digestable carbohydrates.

Dietary fibers as used herein are intended to mean carbohydrate polymers with three or more monomeric units, which are neither digested nor absorbed in the human small intestine. Dietary fibers comprise edible carbohydrate polymers naturally occurring in the food as consumed, edible carbohydrate polymers which have been obtained from food raw material by physical, enzymatic or chemical means, edible synthetic carbohydrate polymers, and any mixture thereof.

Preferred the partially acid-hydrolyzed starch is water-soluble, high in dietary fibers, has a low sweetness and a neutral taste. A typical commercial example is Nutriose FM06 (corn-based) or FB06 (wheat-based) of Roquette USA. Other examples are Cargill Plus of Cargill, Stadex, Col of Tate & Lyle.

In addition, the binder composition comprises further binder components. One of these further binder components is a partially enzymatic hydrolyzed starch such as and preferably a maltodextrin.

A typical commercial example is Glucidex of Roquette, USA. A preferred partially enzymatic hydrolyzed starch has a dextrose equivalent (DE) of less than 20 and preferably of between about 4 and 10 and more preferably of between 5 and 8, such as Glucidex R6. Still more preferably the dextrose equivalent of the partially enzymatic hydrolyzed starch is at least 6. The dextrose equivalent of a polysaccharide or polysaccharide mixture identifies the percentage of reducing sugar in the dry substance. It corresponds to the quantity of glucose (= dextrose), which had the same reducing power per 100 g of dry substance. The DE value is a measure for how far the polymer degradation has occurred. The dextrose equivalent can be determined according to the ISO standard 5377.

The combination of a partially acid-hydrolyzed starch, preferably a partially acid-hydrolyzed starch as specified supra, and a partially enzymatic hydrolyzed starch, preferably a partially enzymatic hydrolyzed starch as specified herein, provides for an improved product in terms of better adhesion of the components of the snack product. Moreover, such mixtures are easier to form into various desired shape such as a bar, round balls or a round shape.

In such a combination the partially acid-hydrolyzed starch, preferably having a DE value as specified supra, is present in an amount of 0.1-25 wt.%, more preferably in an amount of 1-20 wt.%, still more preferably in an amount of 2-19 wt.%, still more preferably in an amount of 4-18 wt.% and still more preferred in an amount of 6-17 wt.%, drawn on the total amount of food component. For example the amount may be 2-15 wt.%, drawn on the total amount of food component. And the partially enzymatic hydrolyzed starch is present in an amount of 0.1-6 wt.%, drawn on the total amount of food component. Preferably, the lower limit for the amount of the partially enzymatic hydrolysed starch is 0.2 wt.%, 0.4 wt.%, 0.6 wt.% or 0.8 wt.%, drawn on the total amount of food component.

The food component is selected from the group consisting of nuts, dried or infused fruits, seeds, beans, puffed cereals, and any mixtures thereof. The food component comprises of a plurality of parts, i.e. a plurality of nuts, a plurality of dried or infused fruits, a plurality of seeds, a plurality of beans, a plurality of puffed cereals or any mixtures thereof.

In the snack product which can be manufactured by the method according to the invention, the nuts can be peanuts, walnuts, macadamia, almonds, cashew, hazelnut, pistachio, pecan, brasil and any mixtures thereof. The nuts can be in any form, i.e. whole (shelled) or blanched nuts, coarsely chopped or thinly sliced nuts, nut pieces, and the like.

In the snack product which can be manufactured by the method according to the invention, dried or infused fruits can be used. The dried or infused fruits may be selected from the group consisting of grapes, raisins, peaches, apricots, blueberries, cranberries, pineapple, mango, apple, rhubarb, orange, figs, dates, banana, strawberry and any mixtures thereof. The dried fruits can be in any form, i.e. whole fruits (like berries), coarsely chopped or thinly sliced fruits, fruit pieces, and the like.

In the snack product which can be manufactured by the method according to the invention, seeds may be incorporated. Seeds can be selected from the group consisting of pumpkin, chia, sesame, sunflower, amaranth, sorghum, quinoa, pinetree and any mixtures thereof.

In the snack product which can be manufactured by the method according to the invention, beans may be incorporated. Beans can be selected from the group consisting of soya, kidney, pea, broadbeans and any mixtures thereof.

In the snack product which can be manufactured by the method according to the invention, puffed cereals can include puffed maize, puffed wheat, puffed rice, puffed barley, puffed oat and any mixtures thereof, but the puffed cereals are not limited thereto and further puffed cereals known to the skilled person can be used as well.

Other inclusions or optional ingredients in the snack product which can be manufactured by the method according to the invention can be cocoa nibs, dried vegetables, puffed cereals or puffed non-cereals, grains, sugars, syrups, flavoring compounds and the like or any mixtures thereof.

As can be taken from the appended figures also, in the finished shaped snack product which can be manufactured by the method according to the invention the individual parts of the food component or the individual parts of any mixture of food components, as well as any optionally comprised further ingredients or inclusions, are bounded to each other by the binder composition, so that a solid snack product is obtained, in which the individual components of the snack product, i.e. the parts forming the food component and any further optional components, are fixed in the product so that the given form of the product, for example the bar shape, cluster shape or bite shape, is retained.

The water content of the snack product which can be manufactured by the method according to the invention is indicated by its moisture level. The moisture level may vary between from 0.5 wt.% to 3 wt.%, based on the total weight of the shaped snack product.

In a highly preferred embodiment of the invention, the snack product which can be manufactured by the method according to the invention contains a binder composition that comprises
- 5-25 wt.% of a partially acid-hydrolyzed corn or wheat starch, drawn on the total amount of food component; and
- 0.1-6 wt.% of a partially enzymatic hydrolysed starch or a maltodextrin having a dextrose equivalent of preferably from 4 to 10, still more preferably of from 5 to 8, drawn on the total amount of food component. It has been found that this binder composition is very effective in a wide variety of food component combinations to give the desired snack product. Still more preferably, the upper limit of the partially acid-hydrolyzed corn or wheat starch is 20 wt.%, 19 wt.%, 18 wt.% or 17 wt.%, and the amount of dietary fibers and di- and monosaccharides is preferably as specified supra. The amount of the partially enzymatic hydrolysed starch or maltodextrin is still more preferably 0.2 to 6 wt.%, 0.4 to 5 wt.%, 0.6 to 4 wt.% or 0.8 to 4 wt.%, drawn on the total amount of food component.

The snack product which can be manufactured by the method according to the invention is low in its sugar level which may be less than 7 wt.%, drawn on the total weight of the product. If the snack product of the invention for example contains ingredients, such as fruits, that have a natural sugar content, the sugar level may be less than 15 wt.%, drawn on the total weight of the product, while if the snack product of the invention for example comprises as food component ingredients having a low natural sugar content, the sugar level may be less than 7 wt.%, drawn on the total weight of the product. The term "sugar" as used herein is intended to mean all monosaccharides and disaccharides present in food, including glucose, fructose and sucrose, excluding polyols, i.e. alcohols having more than two hydroxyl groups. These sugars or syrups can be added as further ingredient to the mixture, when manufacturing the snack product and/or they may be provided e.g. by the food component itself (like fruits). The snack product which can be manufactured by the method according to the invention does not comprise other sweeteners than sugars added as further ingredient in fruits.

The binder mixture or binder composition as defined herein above used in providing a snack product, which can be manufactured by the method according to the invention, comprising a food component selected from the group consisting of nuts, dried or infused fruits, seeds, beans and any mixtures thereof. The binder composition is used for bounding parts of the food component, which is preferably as specified supra, to each other, so that a solid shaped snack product can be obtained. In the finished shaped snack product the individual parts are fixed in the product so that the given form of the product, for example a bar shape, is retained.

### BRIEF EXPLANATION OF THE FIGURES

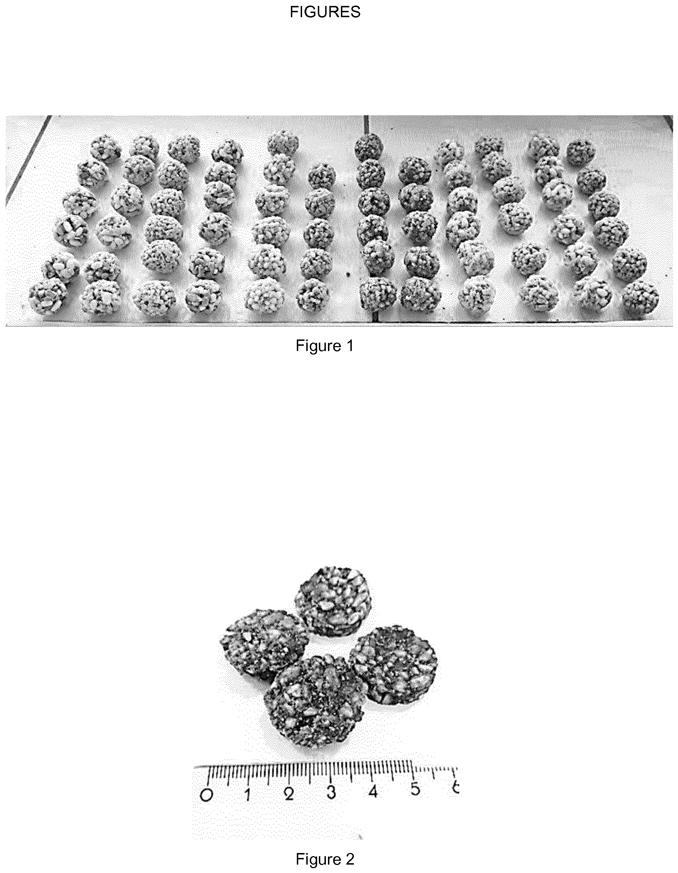

Figure 1 is a picture of shaped snack products which can be manufactured by the method according to the invention in the form of round balls, also referred to as cluster shaped snack products.
Figure 2 is a picture of shaped snack products which can be manufactured by the method according to the invention in round shape, also referred to as bite shaped snack products.

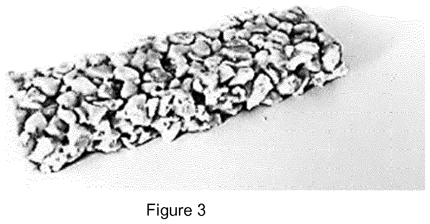

Figure 3 is an illustration of a shaped snack product which can be manufactured by the method according to the invention in the form of a snack bar, also referred to as a bar shaped snack product.

### EXAMPLES

The following exemplary products were obtained by using an aqueous premix A (35 wt.% cold water and 65 wt.% Nutriose FM06) and Premix B is Glucidex R6 maltodextrin. Premix B is mixed with premix A and subsequently blended with the nuts/fruits. Drying was performed in an oven at 125 °C for the indicated time. The result was evaluated in terms of visual appearance, taste and firmness by a user panel.

| **SAMPLE** | **Food component** | **premix A** | | **premix B** | | **Drying 125 °C** |
|---|---|---|---|---|---|---|
| | **gr** | **gr** | **wt.%** | **gr** | **wt.%** | **time** |
| **A:** Salted whole peanuts | 300 | 62 | 21% | 6 | 2% | 17 min |
| **B:** A variety of nuts and dried fruits, about 1:1 | 300 | 64 | 21% | 10 | 3% | 20 min |
| **C:** Spicy peanuts | 300 | 73 | 24% | 10 | 3% | 25min |
| **D:** A variety of nuts and dried fruits, about 1:1 | 264 | 60 | 23% | 2,5 | 1% | 20min |
| **E:** Salted peanut combined with chopped peanuts | 300 | 73 | 24% | 10 | 3% | 25min |
| **F:** Salted peanut 50 wt.% <2mm//50 wt.% whole | 300 | 73 | 24% | 10 | 3% | 27min |

Comparative experiments using only the Nutriose product showed that the mixture sticks too much, cannot be formed or cut, and drying was difficult resulting in a product with too high moisture. A too high moisture content entails the risk that the snack product becomes soft during storage and that growing microorganisms contaminate the product. When using only the Glucidex product, the food component is not glued at all and the snack product is falling apart.

The following exemplary products were obtained by using an aqueous premix A (35 wt.% cold water and 65 wt.% Nutriose FM06) and Premix B is Glucidex R6 maltodextrin. Premix B is mixed with premix A and subsequently blended with the nuts/fruits. Drying was performed in an oven at 125 °C for the indicated time. The result was evaluated in terms of visual appearance, taste and firmness by a user panel.

| **SAMPLE** | **Food component** | **premix A** | | **premix B** | | **Drying 125 °C** |
|---|---|---|---|---|---|---|
| | **gr** | **gr** | **wt.%** | **gr** | **wt.%** | **time** |
| **A:** Salted whole peanuts | 300 | 62 | 21% | 6 | 2% | 17 min |
| **B:** A variety of nuts and dried fruits, about 1:1 | 300 | 64 | 21% | 10 | 3% | 20 min |
| **C:** Spicy peanuts | 300 | 73 | 24% | 10 | 3% | 25min |
| **D:** A variety of nuts and dried fruits, about 1:1 | 264 | 60 | 23% | 2,5 | 1% | 20min |
| **E:** Salted peanut combined with chopped peanuts | 300 | 73 | 24% | 10 | 3% | 25min |
| **F:** Salted peanut 50 wt.% <2mm//50 wt.% whole | 300 | 73 | 24% | 10 | 3% | 27min |

Comparative experiments using only the Nutriose product showed that the mixture sticks too much, cannot be formed or cut, and drying was difficult resulting in a product with too high moisture. A too high moisture content entails the risk that the snack product becomes soft during storage and that growing microorganisms contaminate the product. When using only the Glucidex product, the food component is not glued at all and the snack product is falling apart.

## Claims

1. A method for manufacturing a low sugar shaped snack product, comprising the steps of:
- providing a food component selected from the group consisting of nuts, dried or infused fruits, seeds, beans, puffed cereals and any mixtures thereof,
- providing an aqueous binder composition, which mixture comprises a partially acid-hydrolyzed starch,
- mixing the food component and the aqueous binder composition,
- mixing into the obtained mixture of the food component and the aqueous binder composition a partially enzymatic hydrolyzed starch in dry form and mixing the thus obtained mixture,
- shaping the snack product from the thus obtained mixture, and
- drying the snack product preferably at a temperature in the range of 80 °C to 150 °C,
wherein the aqueous binder composition comprises the partially acid-hydrolyzed starch present in an amount of 0.1-25 wt.%, preferably in an amount of 5-25 wt.%, drawn on the total amount of the food component, and the partially enzymatic hydrolyzed starch, which is present in an amount of 0.1-6 wt.%, drawn on the total amount of the food component, and
wherein the shaped snack product comprises less than 7 wt.% sugar,
drawn on the total weight of the snack product, or, if the snack product contains ingredients such as fruits that have a natural sugar content,
comprises less than 15 wt. %, drawn on the total weight of the product.

2. The method according to claim 1, wherein the aqueous binder composition is provided by mixing a partially acid-hydrolyzed corn or wheat starch with water.

3. The method according to claim 1 or claim 2, wherein the ratio of binder : water varies from 1:10 to 10:1, preferably from 1:5 to 5:1, and more preferably from 1:2 to 2:1.

4. The method according to claim 1, wherein the partially enzymatic hydrolyzed starch has a dextrose equivalent of less than 20, preferably between 5 and 8.

5. The method according to any one of claims 1 to 4 for manufacturing a low sugar shaped snack product, the snack product comprising the food component and a low sugar - binder composition comprising the partially acid-hydrolyzed starch and the partially enzymatic hydrolyzed starch,
wherein the parts of the food component are bounded to each other by the binder composition.

6. The method according to any one of claims 1 to 5, wherein the partially acid-hydrolyzed starch comprises more than 55 wt.% dietary fibers.

7. The method according to any one of claims 1 to 6, wherein the binder composition comprises as a partially enzymatic hydrolyzed starch a maltodextrin, preferably a maltodextrin having a dextrose equivalent value of between about 6 and 8.

8. The method according to any one of claims 5 to 7, wherein the low sugar shaped snack product has an moisture level of 0.1-3 wt.%, drawn on the total weight of the snack product.

9. The method according to any one of claims 5 to 8, wherein the food component comprises up to 50 wt.% of the total amount of food component of comminuted food component.

10. The method according to any one of claims 1 to 9, wherein the binder composition comprises
- 5-25 wt.% of a partially acid-hydrolyzed corn or wheat starch, drawn on the total amount of the food component; and
- 0.1-6 wt.% of a maltodextrin, drawn on the total amount of the food component.

## Patentansprüche

1. Verfahren zur Herstellung eines zuckerreduzierten geformten Snackprodukts, das die Schritte umfasst:
- Bereitstellen einer Lebensmittelkomponente, ausgewählt aus der Gruppe, bestehend aus Nüssen, getrockneten oder aufgegossenen Früchten, Samen, Bohnen, gepufften Cerealien und beliebigen Mischungen davon,
- Bereitstellen einer wässrigen Bindemittelzusammensetzung, wobei die Mischung eine teilweise säurehydrolysierte Stärke umfasst,
- Mischen der Lebensmittelkomponente und der wässrigen Bindemittelzusammensetzung,
- Mischen in die erhaltene Mischung der Lebensmittelkomponente und der wässrigen Bindemittelzusammensetzung eine teilweise enzymatische hydrolisierte Stärke in Trockenform und Mischen der so erhaltenen Mischung
- Formen des Snackprodukts aus der so erhaltenen Mischung, und
- Trocknen des Snackprodukts vorzugsweise bei einer Temperatur in dem Bereich von 80 °C bis 150 °C,
wobei die wässrige Bindemittelzusammensetzung die teilweise säurehydrolysierte Stärke, vorhanden in einer Menge von 0,1 bis 25 Gew.-%, vorzugsweise in einer Menge von 5 bis 25 Gew.-%, bezogen auf die Gesamtmenge der Lebensmittelkomponente, und die teilweise enzymatisch hydrolysierte Stärke umfasst, vorhanden in einer Menge von 0,1 bis 6 Gew.-%, bezogen auf die Gesamtmenge der Lebensmittelkomponente, und
wobei das geformte Snackprodukt weniger als 7 Gew.-% Zucker umfasst,
bezogen auf das Gesamtgewicht des Snackprodukts, oder, wenn das Snackprodukt Zutaten wie Früchte enthält, die einen natürlichen Zuckergehalt aufweisen,
weniger als 15 Gew.-% umfasst, bezogen auf das Gesamtgewicht des Produkts.

2. Verfahren nach Anspruch 1, wobei die wässrige Bindemittelzusammensetzung durch Mischen einer teilweise säurehydrolysierten Mais- oder Weizenstärke mit Wasser bereitgestellt wird.

3. Verfahren nach Anspruch 1 oder 2, wobei das Verhältnis von Bindemittel : Wasser von 1:10 bis 10:1, vorzugsweise von 1:5 bis 5:1 und besonders bevorzugt von 1:2 bis 2:1 variiert.

4. Verfahren nach Anspruch 1, wobei die teilweise enzymatisch hydrolysierte Stärke ein Dextroseäquivalent von weniger als 20, vorzugsweise zwischen 5 und 8, aufweist.

5. Verfahren nach einem der Ansprüche 1 bis 4 zur Herstellung eines zuckerreduzierten geformten Snackprodukts, wobei das Snackprodukt die Lebensmittelkomponente und eine zuckerreduzierte Bindemittelzusammensetzung umfasst, die die teilweise säurehydrolysierte Stärke und die teilweise enzymatisch hydrolysierte Stärke umfasst,
wobei die Teile der Lebensmittelkomponente durch die Bindemittelzusammensetzung aneinander gebunden werden.

6. Verfahren nach einem der Ansprüche 1 bis 5, wobei die teilweise säurehydrolysierte Stärke mehr als 55 Gew.-% Ballaststoffe umfasst.

7. Verfahren nach einem der Ansprüche 1 bis 6, wobei die Bindemittelzusammensetzung als eine teilweise enzymatisch hydrolysierte Stärke ein Maltodextrin, vorzugsweise ein Maltodextrin mit einem Dextroseäquivalentwert zwischen etwa 6 und 8, umfasst.

8. Verfahren nach einem der Ansprüche 5 bis 7, wobei das zuckerreduzierte geformte Snackprodukt einen Feuchtigkeitsgehalt von 0,1 bis 3 Gew.-%, bezogen auf das Gesamtgewicht des Snackprodukts, aufweist.

9. Verfahren nach einem der Ansprüche 5 bis 8, wobei die Lebensmittelkomponente bis zu 50 Gew.-% der Gesamtmenge der Lebensmittelkomponente an zerkleinerter Lebensmittelkomponente umfasst.

10. Verfahren nach einem der Ansprüche 1 bis 9, wobei die Bindemittelzusammensetzung umfasst
- 5-25 Gew.-% einer teilweise säurehydrolysierten Mais- oder Weizenstärke, bezogen auf die Gesamtmenge der Lebensmittelkomponente; und
- 0,1-6 Gew.-% eines Maltodextrins, bezogen auf die Gesamtmenge der Lebensmittelkomponente.

## Revendications

1. Procédé de fabrication d'un produit de snack à faible teneur en sucre, comprenant les étapes consistant à :
- fournir un composant d'aliment choisi dans le groupe constitué par les noix, les fruits séchés ou infusés, les graines, les haricots, les céréales soufflées et l'un quelconque de leurs mélanges,
- fournir une composition de liant aqueuse, lequel mélange comprend un amidon partiellement hydrolysé à l'acide,
- mélanger le composant d'aliment et la composition de liant aqueuse,
- mélanger dans le mélange obtenu du composant d'aliment et de la composition de liant aqueuse un amidon partiellement hydrolysé enzymatiquement sous forme anhydre et mélanger le mélange ainsi obtenu,
- former le produit de snack du mélange à partir du mélange ainsi obtenu, et
- sécher le produit de snack de préférence à une température dans la plage de 80 °C à 150 °C,
la composition de liant aqueuse comprenant l'amidon partiellement hydrolysé à l'acide présent en une quantité de 0,1 à 25 % en poids, de préférence en une quantité de 5 à 25 % en poids, tiré sur la quantité totale du composant d'aliment et l'amidon partiellement hydrolysé enzymatiquement, qui est présent en une quantité de 0,1 à 6 % en poids, tiré sur la quantité totale du composant d'aliment, et
le produit de snack formé comprenant moins de 7 % en poids de sucre, tiré sur le poids total du produit de snack, ou, si le produit de snack contient des ingrédients tels que des fruits qui ont une teneur en sucre naturelle, comprenant moins de 15 % en poids, tiré sur le poids total du produit.

2. Procédé selon la revendication 1, dans lequel la composition de liant aqueuse est fournie en mélangeant un amidon de maïs ou de blé partiellement hydrolysé à l'acide avec de l'eau.

3. Procédé selon la revendication 1 ou la revendication 2, dans lequel le rapport de liant : eau varie de 1:10 à 10:1, de préférence de 1:5 à 5:1 et davantage de préférence de 1:2 à 2:1.

4. Procédé selon la revendication 1, dans lequel l'amidon partiellement enzymatiquement hydrolysé a un équivalent de dextrose de moins de 20, de préférence compris entre 5 et 8.

5. Procédé selon l'une quelconque des revendications 1 à 4 pour fabriquer un produit de snack à faible teneur en sucre, le produit de snack comprenant le composant d'aliment et une composition de liant-à faible teneur en sucre comprenant l'amidon partiellement hydrolysé à l'acide et l'amidon partiellement hydrolysé enzymatiquement,
les parties du composant d'aliment étant liées l'une à l'autre par la composition de liant.

6. Procédé selon l'une quelconque des revendications 1 à 5, dans lequel l'amidon partiellement hydrolysé à l'acide comprend plus de 55 % en poids de fibres diététiques.

7. Procédé selon l'une quelconque des revendications 1 à 6, dans lequel la composition de liant comprend comme amidon partiellement hydrolysé enzymatiquement une maltodextrine, de préférence une maltodextrine ayant une valeur d'équivalent de dextrose comprise entre environ 6 et 8.

8. Procédé selon l'une quelconque des revendications 5 à 7, dans lequel le produit de snack à faible teneur en sucre un niveau d'humidité de 0,1 à 3 % en poids, tiré sur le poids total du produit de snack.

9. Procédé selon l'une quelconque des revendications 5 à 8, dans lequel le composant d'aliment comprend jusqu'à 50 % en poids de la quantité totale de composant d'aliment du composant d'aliment concassé.

10. Procédé selon l'une quelconque des revendications 1 à 9, dans lequel la composition de liant comprend
- 5 à 25 % en poids d'un amidon de maïs ou de blé partiellement hydrolysé à l'acide, tiré sur la quantité totale du composant d'aliment ; et
- 0,1 à 6 % en poids d'une maltodextrine, tirée sur la quantité totale du composant d'aliment.
